Europäisches Patentamt

European Patent Office

Office européen des brevets

(19)

(11) **EP 0 653 609 B1**

(12) **EUROPÄISCHE PATENTSCHRIFT**

(45) Veröffentlichungstag und Bekanntmachung des
Hinweises auf die Patenterteilung:
**05.01.2000   Patentblatt 2000/01**

(51) Int Cl.⁷: $G01D\ 5/38$, G02B 5/18,
G01D 5/26

(21) Anmeldenummer: **94117135.7**

(22) Anmeldetag: **29.10.1994**

(54) **Längen- oder Winkelmesseinrichtung**

Length- or angle of rotation measuring device

Dispositif de mesure de longueurs ou d'angles de rotation

(84) Benannte Vertragsstaaten:
**AT CH DE LI**

(30) Priorität: **12.11.1993   DE 4338680**

(43) Veröffentlichungstag der Anmeldung:
**17.05.1995   Patentblatt 1995/20**

(73) Patentinhaber: **Dr. Johannes Heidenhain GmbH
83292 Traunreut (DE)**

(72) Erfinder: **Michel, Dieter
D-83278 Traunstein (DE)**

(56) Entgegenhaltungen:
**EP-A- 0 186 166          EP-A- 0 211 120
EP-A- 0 349 144          GB-A- 2 168 215**

**Beschreibung**

Die Erfindung bezieht sich auf eine Längen- oder Winkelmeßeinrichtung gemäß dem Oberbegriff des Anspruches 1.

Die in den letzten Jahren stark gestiegenen Anforderungen an die Positioniergenauigkeit von Präzisions-Bearbeitungsmaschinen, z.B. zur Herstellung optischer Bauteile oder bei Plan-Drehmaschinen für Magnetspeicherplatten, aber auch in der Halbleitertechnik, führten zu einer verstärkten Nachfrage nach Längen- Winkelmeßeinrichtungen mit Auflösungen im Sub-Mikrometer-Bereich.

Diese lassen sich durch interferentiell arbeitende Meßeinrichtungen, sogenannte Gitter-Interferometer realisieren.

Bei Gitter-Interferometern wird der Meßwert durch Interferenz zweier an der Maßstabteilung gebeugter Lichtstrahlen und Auswertung der Phasendifferenz gebildet.

Für die Phasenverschiebung $\Omega$ einer an einem Gitter (=Maßstab) gebeugten Welle der Ordnung n gilt bei einer Verschiebung x des Maßstabes mit einer Teilungsperiode C:

$$\Omega = \frac{n*2\pi*x}{C}$$

Daraus ist ersichtlich, daß die Wellenlänge der Lichtquelle keinen Einfluß auf die Phasenverschiebung hat. Das Meßsignal wird also allein aus der Teilung der stabilen Maßverkörperung abgeleitet.

Das Interferenzsignal entsteht durch Überlagerung zweier gebeugter Wellenzüge.

Bei einer Relativbewegung zwischen Meßgitter und gebeugtem Strahl um eine Teilungsperiode und Interferenz der +1. mit der -1. Beugungsordnung durchläuft die Intensität des Interferenzsignales also zwei volle Perioden. Würden die zweiten Beugungsordnungen zur Interferenz überlagert, wären es sogar vier Signalperioden pro Teilungsperiode.

Durch die Wahl der zur Interferenz gebrachten Beugungsordnungen kann die Periode des Interferenzsignales also kleiner als die Periode der Maßstabteilung gemacht werden. Durch den mit steigender Beugungsordnung stark abnehmenden Intensitätsanteil sind dem jedoch Grenzen gesetzt.

Eine andere Möglichkeit, die Periode des Interferenzsignales zu verkleinern, besteht in der mehrfachen Beugung an der Maßstabteilung. Die sich bei jeder Beugung ergebenden Phasenverschiebungen können dann addiert werden.

Die Generierung eines für die Richtungserkennung und zur Interpolation notwendigen phasenverschobenen Signales kann durch ein speziell dimensioniertes Phasengitter oder bei polarisierter, monochromatischer Beleuchtung auch durch polarisations-optische Elemente erfolgen.

Die für Gitter-Interferometer benötigten Maßstäbe mit Phasengitter-Teilung können gemäß dem Stand der Technik lithographisch oder holographisch hergestellt werden. Ein Vorteil lithographisch hergestellter Maßstäbe besteht darin, daß Teilungen mit Längen von über einem Meter erreicht werden können, während bei holographisch hergestellten Maßstäben wegen der hohen Anforderungen an die Abbildungsoptik die Länge auf weniger als 250mm begrenzt ist.

Diese Gitter-Teilungen sind im Längsquerschnitt gestuft und weisen ein annähernd rechteckiges Profil auf. Derartige Gitter sind naturgemäß sehr verschmutzungsempfindlich.

Aus der EP 0 349 144 A1 ist etwa ein Phasengitter bekannt, welches eine nicht-plane Oberfläche aufweist. Es können sich in Teilbereichen der Oberfläche demzufolge Verschmutzungen festsetzen, die die optischen Eigenschaften des Phasengitters undefiniert verändern und sich aufgund der Oberflächen-Topographie des Phasengitters nur schwer entfernen lassen.

Der Erfindung liegt die Aufgabe zugrunde, eine Längen- oder Winkelmeßeinrichtung mit einer Phasengitter-Teilung zu schaffen, die verschmutzungsunempfindlich ist und somit die Längen- oder Winkemeßeinrichtungen störungssicherer und durch bestimmte Ausführungsformen vielseitiger einsetzbar macht.

Diese Aufgabe wird bei Längen- oder Winkelmeßeinrichtungen mit Transmissionsphasengittern gemäß der Merkmale des Anspruches 1 gelöst.

Durch die in den Unteransprüchen angegebenen Merkmale wird die Erfindung noch weiter ausgestaltet.

Mit Hilfe der Zeichnungen wird die Erfindung anhand eines Ausführungsbeispieles noch näher erläutert.

Es zeigt

Figur 1    ein optisches Funktionsprinzip einer interferentiell arbeitenden Längenmeßeinrichtung;

Figur 2    einen Ausschnitt aus Figur 1;

Figur 3    eine perspektivische Ansicht eines Ausschnittes eines Phasengitters gemäß der Erfindung;

Figur 4    eine Variante eines Phasengitters gemäß Figur 3 und

Figur 5    eine bevorzugte Ausführungsform.

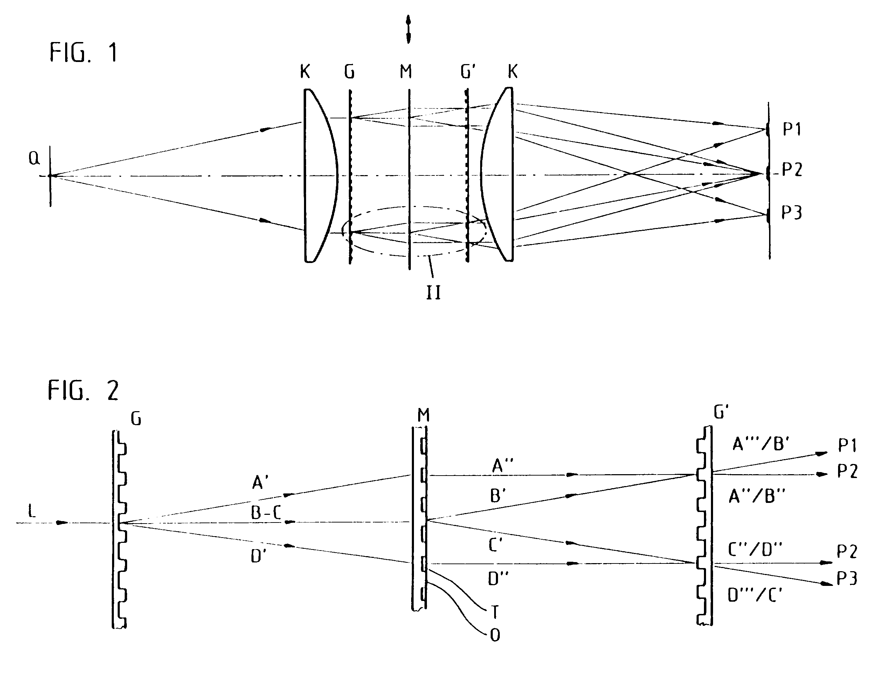

Der optische Aufbau eines Gitter-Interferometers 1 ist in Figur 1 stark vereinfacht im entfalteten Strahlengang dargestellt. Die Beleuchtungseinrichtung bestehend aus Lichtquelle Q, Kondensor K und Photoelementen P1, P2, P3 wurde schematisch dargestellt. Die von der Lichtquelle Q und dem Kondensor K erzeugte ebene Welle sowie die gebeugten Wellen sind durch die Normalen zur Wellenfront dargestellt. Es wird von einer ebenen Welle einer Wellenlänge λ ausgegangen, die senkrecht auf das Abtastgitter G fällt.

Das Arbeitsprinzip basiert darauf, daß die an einem bewegten Gitter-Maßstab M gebeugten Teilstrahlenbündel in der Phase der Lichtfrequenz von der Gitterbewegung moduliert werden.

D.h. während das Gitter M sich um eine Gitterperiode verschiebt, durchläuft die Phase der beiden gebeugten Teilstrahlenbündel 1. Ordnung je 360°. Die Phasen von +1. Ordnung und -1. Ordnung bewegen sich dabei entgegengesetzt. Werden die beiden Strahlenbündel ±1. Ordnung wieder zur Interferenz gebracht, entsteht ein mit doppelter Verschiebefrequenz moduliertes Lichtstrahlenbündel.

Dies gilt zwar sowohl bei Amplituden- als auch bei Phasengitter-Maßstäben. Phasengitter können jedoch so dimensioniert werden, daß die nullte Ordnung ausgelöscht wird und somit in den beiden ersten Beugungsordnungen ein größerer Anteil der eingestrahlten Energie zur Verfügung steht.

Die von der Lichtquelle (Infrarotstrahler Q) ausgehende Strahlung wird von der Kondensorlinse K kollimiert und beleuchtet das Abtast-Phasengitter G.

Wie in Figur 2 gezeigt, wird ein auf dieses Gitter G auftreffendes Lichtstrahlenbündel L teilweise gebeugt bzw. hindurchgelassen. Die dabei entstehenden Teilstrahlenbündel A', B-C und D' werden am reflektierenden Phasengitter-Maßstab M gebeugt und interferieren nach Wiedereintritt in das Abtast-Phasengitter G bzw. G' miteinander. Die Kondensorlinse K fokussiert die in sich parallelen Teilstrahlenbündel A'''/B', A''/B'' bzw. C''/D'' und D'''/C' auf die zugeordneten Photodetektoren P1, P2 und P3.

Bei Bewegung des Maßstabes liefern die drei Photodetektoren P1, P2, P3 jeweils um 1/3 der Signalperiode phasenverschobene Signale (Signalperiode = halbe Maßstabgitterperiode).

Diese Phasenverschiebung wird bestimmt von der Gestaltung des Abtastgitters G bzw. G' (Furchenbreite und -tiefe), wie bereits aus der EP- 0 163 362-B1 bekannt ist.

Im folgenden wird das Zusammenwirken der dargestellten Komponenten erläutert. Die einfallende Welle wird beim Durchgang durch das Indexgitter (Abtastgitter) G im wesentlichen in die drei Richtungen -1, 0, +1 gebeugt. Das Indexgitter G ist dabei so ausgebildet, daß die Strahlen der 0. Ordnung gegenüber den Strahlen der ±1. Ordnung in ihrer Phase um den Betrag Φ verzögert werden. Beim Auftreffen der Strahlen auf den Maßstab M werden diese jeweils in zwei Richtungen der Ordnung ±1 gebeugt. Der Maßstab M ist so ausgebildet, daß keine 0. Beugungsordnung auftritt.

Beim Verschieben des Maßstabes M relativ zu dem Index- oder Abtastgitter G und G' (die körperlich identisch sein können) erfahren die am Maßstab M gebeugten Strahlen der +1. Ordnung (n = +1) eine der Verschiebung x proportionale Phasenänderung um den Betrag Ω und die der -1. Ordnung (n = -1) eine um -Ω, wobei

$$\Omega = \frac{2\pi x}{C}$$

ist.

Beim Durchgang durch das Index- oder Abtastgitter G tritt wiederum Beugung und Phasenverschiebung ein. Wellen gleicher Richtung und gleicher optischer Weglänge kommen zur Interferenz. Die Phasen der interferierenden Teilwellen ergeben sich dabei aus der Summe der Phasenänderungen, die die einzelnen Teilstrahlen beim Durchgang durch die Gitter erfahren. Bei Beleuchtung mit nichtmonochromatischer und räumlich inkohärenter Lichtquelle tragen nur die in Richtung +1, 0, -1 weisenden, interferierenden Wellen zur Signalgewinnung bei.

Am Ausgang des Gittersystemes interferiert in der mit +1 bezeichneten Richtung eine Welle der Phase -Ω mit einer Welle der Phase 2Φ + Ω.

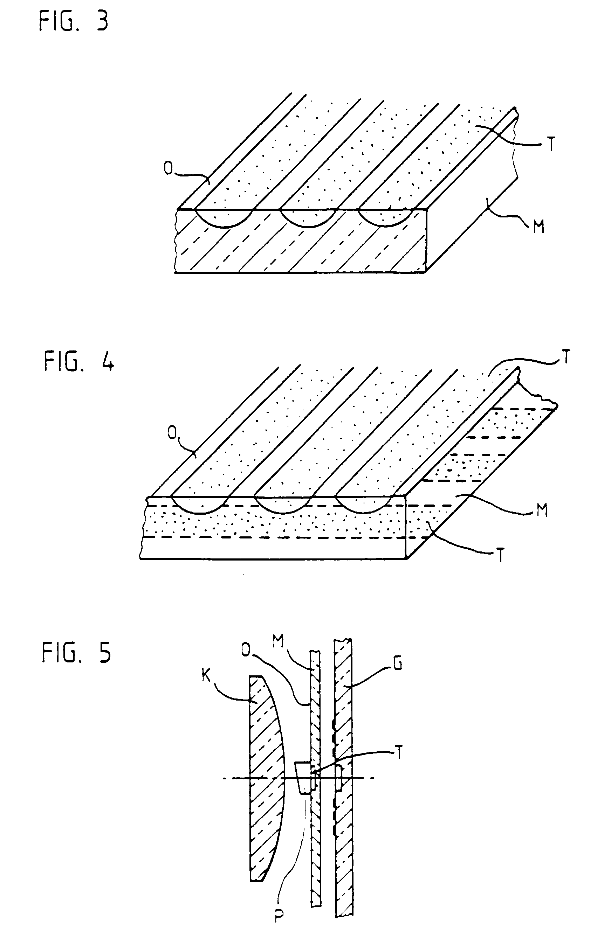

Als Gitterteilungen G, G' und M werden bevorzugt Phasengitter verwendet, die als Transmissions-Phasengitter plane Oberflächen O aufweisen, wie Figur 3 zeigt.

Im Gegensatz zu Längen- oder Winkelmeßeinrichtungen, die mit an der Oberfläche profilierten Phasengittern ausgestattet sind, lassen sich, bei den erfindungsgemäßen Phasengittern G, G' und M die Oberflächen einfach reinigen oder unter Verwendung von Abstreifern sauberhalten.

Bei den genannten Meßeinrichtungen ist oftmals ein bestimmter thermischer Ausdehnungskoeffizient erforderlich, dies bedingt eine bestimmte Materialzusammensetzung (z.B. Silikatglas). Diese Materialien müssen im allgemeinen gegenüber Umwelteinflüssen durch Sperrschichten geschützt und/oder mit sonstigen Funktionsschichten belegt werden. Solche Schichten verändern bei herkömmlichen Stufengittern die optischen Eigenschaften in unzulässiger Weise, da sie im Verhältnis zur Stufenhöhe dick sind.

Bei Phasengittern G, M, G', wie sie in erfindungsgemäßen lichtelektrischen Längen- oder Winkelmeßeinrichtungen zum Einsatz kommen, können dagegen - relativ zur Stufenhöhe - dicke Schichten aufgetragen werden.

Beispiele solcher Schutz-/Funktionsschichten sind Diffussionssperrschichten (z.B. Vermeidung von Alkaliionendiffusion).

Solche Schichten werden z.B. nach bekannten Tauchverfahren (Sol-Gel-Verfahren, OROCERE) oder Dünnschichttechnologien (Plasmapolymerisation, CVD, PVD, Sputtern, etc.) aufgebracht.

Von weiterem besonderen Vorteil ist es, daß die Bezugsparameter hinsichtlich Intensität und Phasenlagen der gebeugten Teilstrahlenbündel zueinander gezielt durch Einhalten bestimmter Fertigungsparameter eingestellt werden können. Sogenannte Überstrukturen, wie sie in Figur 4 gezeigt sind, sind verhältnismäßig einfach realisierbar, wobei die Planheit der Oberflächen O erhalten bleibt.

Das Einstellen der Beugungsparameter ist im Falle der Herstellung durch das Ionenaustauschverfahren z.B. durch die Höhe der Feldunterstützung, Temperaturführung der Salzschmelze, Substratzusammensetzung etc. möglich. Ein nach dieser Methode hergestelltes Gitter für Fernsehkameras ist beispielsweise aus der EP 0 186 166 B1 bekannt.

Wie in Figur 5 schematisch dargestellt ist, ist die Planheit der Phasenstruktur besonders günstig, wenn beispielsweise optische Bauelemente wie Prismen P auf die Teilung (Maßstab M) aufgekittet werden müssen.

Nach dem heutigen Wissensstand lassen sich erfindungsgemäße Gitter für Längen- oder Winkelmeßeinrichtungen beispielsweise nach folgenden Verfahren herstellen:

- Ionenaustausch

- Protonenaustausch

- Ionenimplantation

- Kristallisationsprozesse

- Orientierung von Molekülen/Molekülketten

Bei diesen Verfahren kann an den Bereichen, an denen sich der Brechungsindex ändert, auch eine partielle Verfärbung der Gitterteilung M auftreten.

**Patentansprüche**

1. Lichtelektrische Längen- oder Winkelmeßeinrichtung mit relativ zueinander beweglichen Gitterteilungen, von denen wenigstens eines als Transmissionsphasengitter ausgebildet ist, welches voneinander beabstandete Teilungsstrukturen aufweist, wobei die Teilungsstrukturen (T) einen vom Teilungsträger (M) abweichenden Brechungsindex aufweisen und der Brechungsindex des Teilungsträgerwerkstoffes in diesen Bereichen durch physikalische und/oder chemische Prozesse verändert ist,
dadurch gekennzeichnet,
daß die Oberfläche des Transmissionsphasengitters eine ebene Schutzschicht aufweist, die als Diffusionssperrschicht ausgebildet ist.

2. Lichtelektrische Längen- oder Winkelmeßeinrichtung nach Anspruch 1, dadurch gekennzeichnet, daß das Phasengitter (M) nach einem der bekannten Verfahren:

- Ionenaustausch

- Protonenaustausch
- Ionenimplantation
- Kristallisationsprozesse
- Orientierung von Molekülen - Molekülketten

hergestellt ist.

3. Lichtelektrische Längen- oder Winkelmeßeinrichtung nach Anspruch 1, dadurch gekennzeichnet, daß das Phasengitter (M) eine sogenannte Überstruktur aufweist.

4. Lichtelektrische Längen- oder Winkelmeßeinrichtung nach Anspruch 1, dadurch gekennzeichnet, daß das Phasengitter an parallelen Oberflächen (O) eine Teilungsstruktur aufweist.

5. Lichtelektrische Längen- oder Winkelmeßeinrichtung nach Anspruch 1, dadurch gekennzeichnet, daß die Schutzschicht mittels Tauchverfahren auf dem Transmissionsphasengitter aufgebracht ist.

6. Lichtelektrische Längen- oder Winkelmeßeinrichtung nach Anspruch 1, dadurch gekennzeichnet, daß die Schutzschicht mittels Dünnschichttechnologien auf dem Transmissionsphasengitter aufgebracht ist.

**Claims**

1. A photoelectric length or angle measuring device with grating graduations movable relative to one another, of which at least one is in the form of a transmission phase grating, which has graduation structures spaced from one another, wherein the graduation structures (T) have a refractive index differing from that of the graduation carrier (M) and the refractive index of the graduation carrier material is altered in these regions by physical and/or chemical processes, characterized in that the surface of the transmission phase grating has a flat protective layer which is in the form of a diffusion barrier layer.

2. A photoelectric length or angle measuring device according to claim 1, characterized in that the phase grating (M) is produced according to one of the known methods:

- ion exchange
- proton exchange
- ion implantation
- crystallisation processes
- orientation of molecules - molecule chains.

3. A photoelectric length or angle measuring device according to claim 1, characterized in that the phase grating (M) has a so-called super-structure.

**4.** A photoelectric length or angle measuring device according to claim 1, characterized in that the phase grating has a grating structure on parallel surfaces (O).

**5.** A photoelectric length or angle measuring device according to claim 1, characterized in that the protective layer is applied to the transmission phase grating by means of a dipping process.

**6.** A photoelectric length or angle measuring device according to claim 1, characterized in that the protective layer is applied to the transmission phase grating by means of thin film technologies.

**Revendications**

**1.** Dispositif opto-électronique de mesure de longueurs ou d'angles comprenant des graduations sous forme de réseau qui sont mobiles l'une par rapport à l'autre et parmi lesquelles l'une au moins est conformée en réseau de phase à transmission, les structures de graduation (T) présentant un indice de réfraction différent de celui-ci du support de graduation (M) et l'indice de réfraction du matériau du support de graduation dans ces zones étant modifié par des procédés physique et/ou chimiques, caractérisé par le fait que la surface du réseau de phase à transmission présente une couche de protection plane qui est conformée en couche de jonction diffuse.

**2.** Dispositif opto-électronique de mesure de longueurs ou d'angles selon la revendication 1, caractérisé par le fait que le réseau de phase (M) est fabriqué selon une des procédés connus suivants:

- échange ionique,
- échange protonique
- implantation ionique
- procédés de cristallisation
- orientation de molécules ou de chaînes de molécules.

**3.** Dispositif opto-électronique de mesure de longueurs ou d'angles selon la revendication 1, caractérisé par le fait que le réseau de phase (M) est une surstructure.

**4.** Dispositif opto-électronique de mesure de longueurs ou d'angles selon la revendication 1, caractérisé par le fait que le réseau de phase présente sur des surfaces parallèles (O) une structure de graduation.

**5.** Dispositif opto-électronique de mesure de longueurs ou d'angles selon la revendication 1, caractérisé par le fait que la couche de protection est appliquée sur le réseau de phase à transmission par un procédé au trempé.

**6.** Dispositif opto-électronique de mesure de longueurs ou d'angles selon la revendication 1, caractérisé par le fait que la couche de protection est appliquée sur le réseau de phase à transmission par des technologies en couches minces.

FIG. 1

FIG. 2

FIG. 3

FIG. 4

FIG. 5